(19) Europäisches Patentamt / European Patent Office / Office européen des brevets

(11) **EP 2 526 126 B1**

(12) **EUROPEAN PATENT SPECIFICATION**

(45) Date of publication and mention
of the grant of the patent:
**01.04.2020 Bulletin 2020/14**

(21) Application number: **11701181.7**

(22) Date of filing: **17.01.2011**

(51) Int Cl.:
*C08F 8/00* (2006.01)         *C08F 8/06* (2006.01)
*C08F 8/50* (2006.01)         *C08F 10/02* (2006.01)
*C08L 23/04* (2006.01)        *B29C 55/28* (2006.01)
*B29C 48/00* (2019.01)        *B29C 48/10* (2019.01)
*B29C 48/14* (2019.01)        *C08J 5/18* (2006.01)
*C08L 23/08* (2006.01)

(86) International application number:
**PCT/US2011/021461**

(87) International publication number:
**WO 2011/090914 (28.07.2011 Gazette 2011/30)**

(54) **METHOD FOR IMPROVING THE BUBBLE STABILITY OF A POLYETHYLENE COMPOSITION SUITABLE FOR BLOWN FILM EXTRUSION PROCESS**

VERFAHREN ZUR VERBESSERUNG DER BLASENSTABILITÄT EINER POLYETHYLENZUSAMMENSETZUNG FÜR EIN BLASFOLIEN-SPRITZGUSSVERFAHREN

PROCÉDÉ POUR AMÉLIORER LA STABILITÉ DE BULLE D'UNE COMPOSITION DE POLYÉTHYLÈNE ADAPTÉE POUR UN PROCÉDÉ D'EXTRUSION DE FILM SOUFFLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2010 US 296135 P**

(43) Date of publication of application:
**28.11.2012 Bulletin 2012/48**

(73) Proprietor: **Union Carbide Corporation**
**Seadrift, TX 77983 (US)**

(72) Inventors:
• **NEUBAUER, Anthony C.**
**Piscataway**
**NJ 08854 (US)**
• **MICHIE JR., William J.**
**Missouri City**
**TX 77459 (US)**

(74) Representative: **Boult Wade Tennant LLP**
**Salisbury Square House**
**8 Salisbury Square**
**London EC4Y 8AP (GB)**

(56) References cited:
**EP-A1- 1 408 055        EP-A2- 0 700 769**
**WO-A1-03/047839        WO-A1-2006/023213**
**US-A- 5 962 598**

• **LEAL V ET AL: "New results on the correlation molecular architecture-melt elasticity-blowing process-film properties for conventional and metallocene-catalyzed polyethylenes", MACROMOLECULAR MATERIALS AND ENGINEERING 20060616 WILEY-VCH VERLAG DE, vol. 291, no. 6, 16 June 2006 (2006-06-16), pages 670-676, XP002631066, DOI: DOI:10.1002/MAME.200600072**

**Description**

**Field of Invention**

The instant invention relates to a method for improving the bubble stability of a polyethylene composition suitable for blown film extrusion process.

**Background of the Invention**

Almost all polyethylene films are fabricated as either a cast or blown film. Each process has its own advantages and disadvantages. The main difference between the two processes is the manner of cooling an extruded sheet of molten polymer. In general, cast films have a better appearance, and gauge thickness is more readily controlled. Blown films are more evenly oriented in machine and traverse directions; thus, providing greater toughness.

EP-A-700,769 describes a process for improving the bubble stability of a linear polyethylene wherein before its complete melting in an extruder, the polyethylene is brought into contact with oxygen or a gas mixture containing oxygen, and the polyethylene thus brought into contact is treated thermomechanically in the molten state in the extruder, the preliminary bringing into contact and the thermomechanical treatment being combined so that the treatment is conducted to its completion with the value of the loss tangent of the polyethylene has lost from 15 to 70% of its initial value before treatment and bringing into contact.

WO-A-03/047839 describes a process for extruding a bimodal polyethylene resin, the process comprising: (a) providing a polyethylene homopolymer or copolymer resin having a bimodal molecular weight distribution; (b) conveying the resin through an extruder having a feed zone in which the resin is not melted, a melt-mixing zone in which at least a portion of the resin is melted, and a melt zone in which the resin is in a molten state, each zone being partially filled with the resin; and (c) contacting the molten resin in the melt zone with a gas mixture comprising 8 to 40% by volume oxygen.

WO-A-2006/023213 describes a method of tailoring polyethylenes utilizing 0.5 to 7.95 volume percent oxygen containing gases. The tailoring occurs in a melt-conveying zone of a mixer/extruder. The effect is to increase elasticity (G'/G") of the polyethylenes more than 10% oversimilar polyethylenes that are extruded/mixed in the substantial absence of oxygen or oxygen containing gases.

EP-A-1,408,055 describes a polyethylene type resin having a density of 940 to 970 kg/m$^2$ and a long relaxation time component index of 1.5 to 10 produced by a slurry-polymerization process of olefin in the presence of a Ziegler catalyst and melt-kneading the resulting polymers.

US-A-5,962,598 describes a polyethylene film composition produced by melt extruding a linear copolymer of ethylene and at least one other olefin having from 3 to 8 carbon atoms at a temperature of at least 200°C in the presence of an effective amount of a free radical initiator sufficient to improve bubble stability without any significant reduction in tear strength of film produced from said composition as compared with film produced from said linear copolymer.

In general, the blown film technique involves extrusion of the plastic through a circular die, followed by expansion, by the pressure of internal air admitted through the center of the mandrel, cooling, and collapsing of the bubble. In operation, the blown film is extruded upward through guiding devices into a set of pinch rolls which collapses the bubble so that it can be wound onto a roll. It can then be split, gusseted, sealed and/or surface treated in line.

Bubble stability is an important aspect of blown film process. Currently, bubble stability of high molecular weight high density polyethylene (HMW HDPE) is typically determined by the use of a commercial scale film line. Although other measurements and techniques such as changes in g'/g" ratio, gel permeation chromatography (GPC) method, are available, these methods are insensitive to minor changes in long chain branching of the polymer.

Accordingly there is a need for a rheology method which can be used to predict HMW HDPE bubble stability, which is more sensitive when compared to other known methods and eliminates the need to use a full scale commercial film line to predict such bubble stability while maintaining a reduced cost.

**Summary of the Invention**

The instant invention provides a method for improving the bubble stability of a polyethylene composition suitable for blown film extrusion process.

In one embodiment, the method for improving the bubble stability of a polyethylene composition suitable for blown film extrusion process comprises the steps of: providing an initial polyethylene composition comprising ethylene polymers comprising ethylene and 0.1% to 40% by weight of one or more units derived from the comonomers selected from branched higher alpha-olefins containing 3 to 20 carbon atoms and branched hydrocarbon dienes having from 5 to 20 carbon atoms, the initial polyethylene composition having a density in the range of 0.900 g/cm$^3$ to 0.970 g/cm$^3$ as measured in accordance with ASTM D792-03 and an relaxation spectrum index ("RSI") value in the range of 10 to 100;

oxygen tailoring said polyethylene composition; thereby forming an oxygen tailored polyethylene composition; measuring the RSI value of the oxygen tailored polyethylene composition; wherein the RSI value of the said oxygen tailored polyethylene composition increases from 10% to 300% over that of the initial polyethylene composition; and wherein the bubble stability of the oxygen tailored polyethylene composition is greater than that of the initial polyethylene composition.

In a preferred embodiment, the instant invention provides a method for improving the bubble stability of a polyethylene composition suitable for blown film extrusion process, in accordance with the preceding embodiment, except that the oxygen tailoring step comprises contacting the polyethylene composition in the molten state with oxygen.

In a still preferred embodiment, the instant invention provides a method for improving the bubble stability of a polyethylene composition suitable for blown film extrusion process, in accordance with the preceding preferred embodiment, except that the oxygen tailoring step further comprises thermomechanical treatment of the polyethylene composition in an extruder.

In still more preferred embodiment, the instant invention provides a method for improving the bubble stability of a polyethylene composition suitable for blown film extrusion process, in accordance with the preceding still preferred embodiment, except that the extruder provides a specific energy input in the range of 0.10 kWh per kilogram to 0.50 kWh per kilogram of the polyethylene composition.

## Brief Description of the Drawings

For the purpose of illustrating the invention, there is shown in the drawings a form that is exemplary; it being understood, however, that this invention is not limited to the precise arrangements and instrumentalities shown.

Fig. 1 is a graph illustrating the relationship between RSI and Bubble Stability Ranking as well as the relationship between g'/g" and Bubble Stability Ranking; and
Fig. 2 is a graph illustrating the relationship between Percent Increase and Bubble Stability Ranking.

## Detailed Description of the Invention

The instant invention provides a method for improving the bubble stability of a polyethylene composition suitable for blown film extrusion process. The method for improving the bubble stability of a polyethylene composition suitable for blown film extrusion process comprises the steps of: providing an initial polyethylene composition comprising ethylene polymers comprising ethylene and 0.1% to 40% by weight of one or more units derived from the comonomers selected from branched higher alpha-olefins containing 3 to 20 carbon atoms and branched hydrocarbon dienes having from 5 to 20 carbon atoms, the initial polyethylene composition having a density in the range of 0.900 g/ cm3 to 0.970 g/cm3 as measured in accordance with ASTM D792-03 and an relaxation spectrum index (RSI) value in the range of 10 to 100; oxygen tailoring said polyethylene composition;thereby forming an oxygen tailored polyethylene composition; measuring the RSI value of the oxygen tailored polyethylene composition; wherein the RSI value of the said oxygen tailored polyethylene composition increases from 10% to 300% over that of the initial polyethylene composition; and wherein the bubble stability of the oxygen tailored polyethylene composition is greater than that of the initial polyethylene composition.

The term oxygen tailoring, as used herein, refers to the process of contacting the polyethylene composition, for example in the molten state, with oxygen. Oxygen may be as part of a mixture or it may be by itself. Contacting the polyethylene composition with oxygen may occur simultaneously with the thermomechanical treatment of the polyethylene composition in an extruder; or in the alternative, contacting the polyethylene composition, for example in the molten state, with oxygen may be followed with the thermomechanical treatment of the polyethylene composition in extruder. The extruder may be any extruder; for example, the extruder may be a single screw extruder or a multiple screw extruder such as twin screw extruder or continuous mixer. Such extruders are generally known to a person skilled in the art. The extruder may provide a specific mechanical energy in the range of from 0.10 kWh per kilogram to 0.50 kWh per kilogram of the polyethylene composition. All individual values and subranges from 0.10 kWh per kilogram to 0.50 kWh per kilogram are included herein and disclosed herein; for example, the specific energy input can be from a lower limit of 0.10 kWh per kilogram, 0.12 kWh per kilogram, 0.14 kWh per kilogram, or 0.16 kWh per kilogram to an upper limit of 0.24 kWh per kilogram, 0.30 kWh per kilogram, 0.40 kWh per kilogram, or 0.50 kWh per kilogram. For example, the extruder may provide a specific mechanical energy in the range of from 0.10 kWh per kilogram to 0.24 kWh per kilogram of the polyethylene composition; or in the alternative, from 0.12 kWh per kilogram to 0.30 kWh per kilogram; or in the alternative, from 0.14 kWh per kilogram to 0.40 kWh per kilogram; or in the alternative, from 0.16 kWh per kilogram to 0.50 kWh per kilogram.

The polyethylene composition comprises at least one ethylene polymer. The ethylene polymer, which may be an ethylene homopolymer or interpolymer of ethylene, may be readily fabricated into a variety of useful films such as general purpose films, clarity films, or shrink films. For example, ethylene polymer include ethylene homopolymers, and interpolymers of ethylene and linear or branched higher alpha-olefins containing 3 to about 20 carbon atoms. Suitable higher alpha-olefins include, for example, propylene, 1-butene, 1-pentene, 1-hexene, 4-methyl-1-pentene, 1-octene and 3, 5, 5-trimethyl 1-hexene. Dienes, particularly non-conjugated dienes, may also be polymerized with the ethylene. Suitable non-conjugated dienes are linear, branched, or cyclic hydrocarbon dienes having from about 5 to about 20 carbon atoms. Especially preferred dienes include 1,5-hexadiene, 5-vinyl-2-norbornene, 1,7-octadiene and the like. Ethylene polymers also include, for example, ethylene/propylene rubbers (EPR's), ethylene/propylene/diene terpolymers (EPDM's) and the like. Aromatic compounds having vinyl unsaturation, such as styrene and substituted styrenes, may be included as comonomers as well. Particularly preferred ethylene polymers comprise ethylene and 0.1% to about 40% by weight of one or more units derived from the comonomers described above. The polyethylene composition may have a density in the range of 0.900 $g/cm^3$ to 0.970 $g/cm^3$. All individual values and subranges from 0.900 $g/cm^3$ to 0.970 $g/cm^3$ are included herein and disclosed herein; for example, the density can be from a lower limit of 0.900 $g/cm^3$, or 0.910 $g/cm^3$, to an upper limit of 0.960 $g/cm^3$, or 0.970 $g/cm^3$. For example, the density may be in the range of from 0.910 $g/cm^3$ to 0.970 $g/cm^3$, or in the alternative, the density may be in the range of from 0.920 $g/cm^3$ to 0.960 $g/cm^3$. The polyethylene composition may have a high load melt index ($I_{21}$) in the range of from 2 g/10 minutes to 20 g/10 minutes. All individual values and subranges from 2 g/10 minutes to 20 g/10 minutes are included herein and disclosed herein; for example, the high load melt index ($I_{21}$) can be from a lower limit of 2 g/10 minutes, 4 g/10 minutes, 5 g/10 minutes, or 6 g/10 minutes to an upper limit of 12 g/10 minutes, 13 g/10 minutes, 14 g/10 minutes, or 20 g/10 minutes. For example, the high load melt index ($I_{21}$) may be in the range of from 4 g/10 minutes to 12 g/10 minutes; or in the alternative, the high load melt index ($I_{21}$) may be in the range of from 5 g/10 minutes to 13 g/10 minutes. The polyethylene composition may have a g'/g" in the range of from 0.2 to 10; for example, in the range of 0.3 to 1. The polyethylene composition may have a molecular weight distribution ($M_w/M_n$) in the range of from 2 to 100; for example, in the range of from 8 to 40. The polyethylene composition has an initial relaxation spectrum index (RSI) value in the range of 10 to 100. The RSI value is dimensionless. The initial RSI value refers to the RSI value of the polyethylene composition prior to any oxygen tailoring. The oxygen tailored RSI value of the said oxygen tailored polyethylene composition increases from 10% to 300% of its initial value prior to oxygen tailoring, preferably from 15% to 250%. The oxygen tailored RSI value refers to the RSI value of the inventive oxygen tailored polyethylene composition.

The RSI of the polyethylene composition is determined by first subjecting the polymer to a shear deformation and measuring its response to the deformation using a rheometer. As is known in the art, based on the response of the polymer and the mechanics and geometry of the rheometer used, the relaxation modulus G(t) or the dynamic moduli G'(co) and G"(ω) may be determined as functions of time t or frequency ω, respectively (See J. M. Dealy and K. F. Wissbrun, Melt Rheology and Its Role in Plastics Processing, Van Nostrand Reinhold, 1990, pp.269-297). The mathematical connection between the dynamic and storage moduli is a Fourier transform integral relation, but one set of data may also be calculated from the other using the well known relaxation spectrum. See S. H. Wasserman, J. Rheology, Vol. 39, pp. 601-625 (1995) and U.S. Patent 5,798,427. Using a classical mechanical model a discrete relaxation spectrum consisting of a series of relaxations or "modes," each with a characteristic intensity or "weight" and relaxation time may be defined. Using such a spectrum, the moduli are re-expressed as:

$$G'(\omega) = \sum_{i=1}^{N} g_i \frac{(\omega\lambda_i)^2}{1+(\omega\lambda_i)^2}$$

$$G''(\omega) = \sum_{i=1}^{N} g_i \frac{\omega\lambda_i}{1+(\omega\lambda_i)^2}$$

$$G(t) = \sum_{i=1}^{N} g_i \exp\left(\frac{-t}{\lambda_i}\right)$$

where N is the number of modes and $g_i$ and $\lambda_i$ are the weight and time for each of the modes (See J. D. Ferry, Viscoelastic Properties of Polymers, John Wiley & Sons, 1980, pp. 224-263). A relaxation spectrum may be defined for the polymer using software such as IRIS® rheological software, which is commercially available from IRIS Development. Once the distribution of modes in the relaxation spectrum is calculated, the first and second moments of the distribution, which are analogous to $M_n$ and $M_w$, the first and second moments of the molecular weight distribution, are calculated as follows:

$$g_I = \frac{\sum_{i=1}^{N} g_i}{\sum_{i=1}^{N} \frac{g_i}{\lambda_i}}$$

$$g_{II} = \frac{\sum_{i=1}^{N} g_i \lambda_i}{\sum_{i=1}^{N} g_i}$$

RSI is defined as:

$$RSI = \frac{g_{II}}{g_I}$$

Because RSI is sensitive to such parameters as a polymer's molecular weight distribution, molecular weight, and long chain branching, it is a reliable indicator of the processability of a polymer. The higher the value of RSI, the better the processability of the polymer.

Any conventional ethylene polymerization process may be employed to produce the polyethylene compositions suitable for blown film process. Such conventional ethylene polymerization processes include, but are not limited to, gas phase polymerization, slurry phase polymerization, solution phase polymerization, and combinations thereof using conventional reactors, e.g., gas phase reactors, loop reactors, stirred tank reactors, and batch reactors in series, or in series and parallel. The polymerization system may be a single polymerization system, a dual sequential polymerization system, or a multi-sequential polymerization system. Examples of dual sequential polymerization system include, but are not limited to, gas phase polymerization/gas phase polymerization; gas phase polymerization/solution phase polymerization; solution phase polymerization/gas phase polymerization; solution phase polymerization/solution phase polymerization; slurry phase polymerization/slurry phase polymerization; solution phase polymerization/slurry phase polymerization; slurry phase polymerization/solution phase polymerization; slurry phase polymerization/gas phase polymerization; and gas phase polymerization/slurry phase polymerization. The multi-sequential polymerization systems may include at least two or more polymerization systems. Pre-polymerization may also be employed for any reaction system, for example, the pre-polymerization reactor would precede any of the above combinations.

The catalyst system may also be a conventional catalyst system. Similarly, catalysts compositions that may be used to make the ethylene polymers used in the invention are any of those known for the polymerization of ethylene, such as those comprising one or more conventional Ziegler-Natta catalysts, chrome or modified chrome catalysts (aluminum, phosphorous), nickel based catalysts, as well as any metallocene or single site catalysts, all of which are well documented in the literature. The use of a mixed catalyst system within or among catalyst families may also be used to make the ethylene polymers used in the invention.

In one production embodiment, polymerization may be conducted in the gas phase in a stirred or fluidized bed reactor, using equipment and procedures well known in the art. Preferably, pressures in the range of 6.9 kPag (1 psig) to 6.9 MPag (1000 psig), preferably 345 kPag (50 psig) to 2.76 MPag (400 psig), and most preferably 690 kPag (100 psig) to 2.07 MPag (300 psig), and temperatures in the range of 30 °C to 130 °C, preferably 65 °C to 120 °C are used. Ethylene and other monomers are contacted with an effective amount of catalyst composition at a temperature and a pressure sufficient to initiate polymerization.

Suitable gas phase polymerization reaction systems comprise a reactor to which monomer(s) and catalyst composition may be added, and that contain a bed of forming polyethylene particles. The invention is not limited to any specific type of gas phase reaction system. As an example, a conventional fluidized bed process is conducted by passing a gaseous stream containing one or more monomers continuously through a fluidized bed reactor under reaction conditions and in the presence of catalyst composition at a velocity sufficient to maintain the bed of solid particles in a suspended condition. The gaseous stream containing unreacted gaseous monomer is withdrawn from the reactor continuously, compressed, cooled and recycled into the reactor. Product is withdrawn from the reactor and make-up monomer is added to the recycle stream.

Conventional additives may be included in the process, provided they do not interfere with the polymerization process described herein as well as the properties of the polyethylene compositions made therewith.

When hydrogen is used as a chain transfer agent in the gas phase polymerization process, it is used in amounts varying between 0.001 mole to 10 mole of hydrogen per mole of total monomer feed. Also, as desired for temperature control of the system, any gas inert to the catalyst composition and reactants can also be present in the gas stream.

In an alternative production embodiment, a dual sequential polymerization system connected in series may be used.

In another alternative production embodiment, a catalyst system including a cocatalyst, ethylene, one or more comonomers, hydrogen, and optionally inert gases and/or liquids, e.g., nitrogen, isopentane, and hexane, are continuously fed into a first reactor to form a first component. The first reactor may be connected to a second reactor in series. The first component/active catalyst mixture is then continuously transferred, for example, in batches from the first reactor to the second reactor. Ethylene, hydrogen, cocatalyst, and optionally inert gases and/or liquids, e.g., nitrogen, isopentane, hexane, are continuously fed to the second reactor, and the product, i.e., the polyethylene composition is continuously removed, for example, in batches from the second reactor. A preferred mode is to take batch quantities of first component from the first reactor, and transfer these to the second reactor using the differential pressure generated by a recycled gas compression system. The polyethylene composition is then transferred to a purge bin under inert atmosphere conditions. Subsequently, the residual hydrocarbons are removed, and moisture is introduced to reduce any residual aluminum alkyls and any residual catalysts before the polyethylene composition is exposed to oxygen.

The polyethylene composition is then transferred to an extruder, wherein it is exposed to oxygen, for example in the molten state. Such oxygen tailoring processes are well known in the art. The oxygen may be present in the amount of less than 21% (wt/wt); for example, oxygen is present in the range of 0.5% (wt/wt) to 21% (wt/wt); or in the alternative, from 0.5% (wt/wt) to 10% (wt/wt). The extruder may provide a specific energy input in the range of from 0.10 kWh per kilogram to 0.50 kWh per kilogram; for example, 0.13 kWh per kilogram to 0.27 kWh per kilogram. The oxygen tailored polyethylene composition having improved bubble stability may further be melt screened by processing through one or more active screens (positioned in series of more than one) with each active screen having a micron retention size of from 2 $\mu$m to 400 $\mu$m, and preferably 2 $\mu$m to 300 $\mu$m, and most preferably 2 $\mu$m to 70 $\mu$m, at a mass flux of 5 lb/hr/in$^2$ to 100 lb/hr/in$^2$ (1.0 kg/s/m$^2$ to 20 kg/s/m$^2$). Such further melt screening is disclosed in U.S. Patent No. 6,485,662, which discloses melt screening. The oxygen tailored polyethylene composition having improved bubble stability is then pelletized. Such pelletization techniques are generally known.

The oxygen tailored polyethylene composition may further be modified via peroxide addition, irradiation, azide coupling, and any combinations thereof. Such further modifications are well known in the art.

The oxygen tailored polyethylene compositions may be blended with other polymers and resins as desired using techniques known in the art. In addition, various additives and agents, such as thermo-oxidation and photo-oxidation stabilizers including hindered phenolic antioxidants, hindered amine light stabilizers and aryl phosphites or phosphonites, crosslinkers including dicumyl peroxide, colorants including carbon blacks and titanium dioxide, lubricants including metallic stearates, processing aids including fluoroelastomers, slip agents including oleamide or erucamide, film antiblock or release agents including controlled particle size talc or silica, blowing agents, flame retardants, nucleators, and other conventional materials may be mixed with the oxygen tailored polyethylene composition of the invention as desired. The oxygen tailored polyethylene compositions having improved bubble stability are useful for fabrication into a variety of finished articles such as films including clarity films and shrink films. Different methods may be employed to form such film; for example, films may be formed via blown film extrusion process.

In blown film extrusion process, the oxygen tailored polyethylene composition having improved bubble stability is provided. The oxygen tailored polyethylene composition having improved bubble stability is melt extruded through an annular circular die thereby forming a tube. The tube is expanded by air, for example two or three times its diameter, and at the same time, the cooled air chills the web to a solid state. The degree of blowing or stretch determines the balance and level of tensile and impact properties. An internal air cooling ring may be used as well, in order to increase throughput rates and optical quality. Rapid cooling is essential to achieve the crystalline structure necessary to give clear, glossy films. The film tube is then collapsed within a V-shaped frame of rollers and is nipped at the end of the frame to trap the air within the bubble. The nip rolls also draw the film away from the die. The draw rate is controlled to balance the physical properties with the transverse properties achieved by the blow draw ratio. The tube may be wound as such or may be slit and wound as a single-film layer onto one or more rolls. The tube may also be directly processed into bags.

### Examples

The following examples illustrate the present invention but are not intended to limit the scope of the invention.

### Inventive Example 1

Inventive Example 1 is a high density polyethylene composition which was oxygen tailored. The processing conditions as well as the bubble stability properties of the Inventive Example 1 are reported in Table I and Table II.

**Comparative Example A**

Comparative Example A is a high density polyethylene composition which was not oxygen tailored. The processing conditions as well as the bubble stability properties of the Comparative Example A are reported in Table I and Table II.

**Comparative Example B**

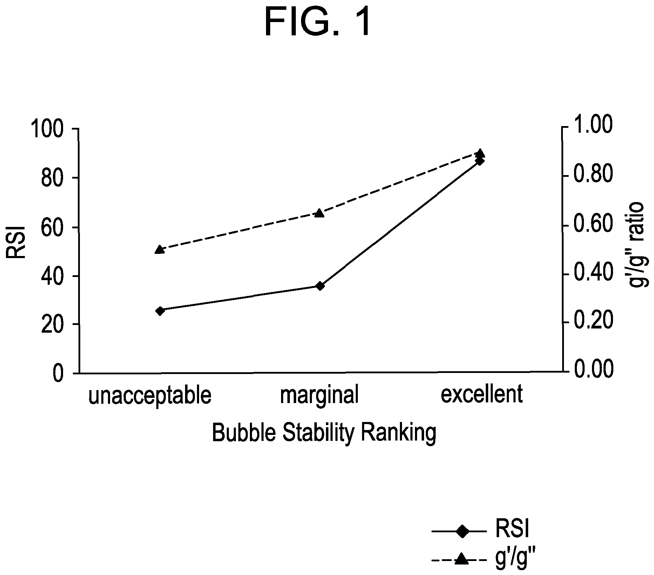

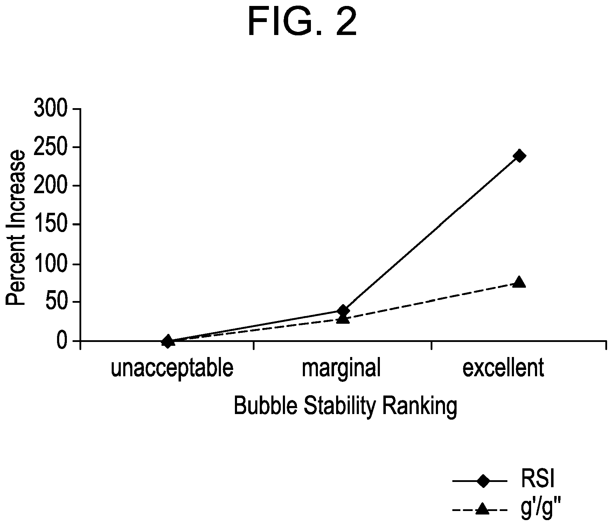

Comparative Example B is a high density polyethylene composition which was oxygen tailored. The processing conditions as well as the bubble stability properties of the Comparative Example B are reported in Table I and Table II.
The RSI relationship as well as g'/g" relationship of Inventive Example 1 and Comparative Example A and B are graphically shown in Figs. 1 and 2, which clearly show that the RSI index is much more sensitive to low levels of long chain branching, which may impact bubble stability, than the changes in g'/g".

**Table I**

| | Density, g/cm$^3$ | I$_{21}$, dg/min | O$_2$, % (wt/wt) | Processing Rate (throughput rate in compounding unit), kg/h | SEI, kWh/kg | M$_w$, g/ gmole | M$_n$, g/ gmole | RSI | g'/g" at 0.11/s and 190 °C |
|---|---|---|---|---|---|---|---|---|---|
| Inventive Ex. 1 | 0.949 | 9.5 | 6.0 | 20,400 | 0.188 | 215,000 | 11,600 | 85.8 | 0.892 |
| Comparative Ex. A | 0.948 | 9.0 | 0.0 | 18,200 | 0.197 | 235,000 | 11,200 | 25.3 | 0.504 |
| Comparative Ex. B | 0.948 | 8.7 | 0.5 | 20,800 | 0.180 | 227,000 | 11,010 | 35.3 | 0.650 |

### Table II

|  | Maximum Winder Speed, m/s (ft/min) | Bubble Stability Ranking |
|---|---|---|
| Inventive Ex. 1 | 1.8 (350) | Excellent |
| Comparative Ex. A | 0.4 (690) | Unacceptable |
| Comparative Ex. B | 1.4 (270) | Marginal |

## Test Methods

Test methods include the following:
Weight average molecular weight ($M_w$) and number average molecular weight ($M_n$) were determined according to methods known in the art using triple detector GPC, as described herein below.

The molecular weight distributions of the ethylene polymers were determined by gel permeation chromatography (GPC). The chromatographic system consisted of a Waters (Millford, MA) 150 °C high temperature gel permeation chromatograph, equipped with a Precision Detectors (Amherst, MA) 2-angle laser light scattering detector Model 2040. The 15° angle of the light scattering detector was used for calculation purposes. Data collection was performed using Viscotek TriSEC software Version 3 and a 4-channel Viscotek Data Manager DM400. The system was equipped with an on-line solvent degas device from Polymer Laboratories. The carousel compartment was operated at 140 °C and the column compartment was operated at 150 °C. The columns used were four Shodex HT 806M 300 mm, 13 $\mu$m columns and one Shodex HT803M 150 mm, 12 $\mu$m column. The solvent used was 1,2,4 trichlorobenzene. The samples were prepared at a concentration of 0.1 gram of polymer in 50 milliliter of solvent. The chromatographic solvent and the sample preparation solvent contained 200 $\mu$g/g of butylated hydroxytoluene (BHT). Both solvent sources were nitrogen sparged. Polyethylene samples were stirred gently at 160 °C for 4 hours. The injection volume used was 200 microliter, and the flow rate was 0.67 milliliter/min. Calibration of the GPC column set was performed with 21 narrow molecular weight distribution polystyrene standards, with molecular weights ranging from 580 g/gmole to 8,400,000 g/gmol, which were arranged in 6 "cocktail" mixtures with at least a decade of separation between individual molecular weights. The standards were purchased from Polymer Laboratories (Shropshire, UK). The polystyrene standards were prepared at 0.025 gram in 50 milliliter of solvent for molecular weights equal to, or greater than, 1,000,000 g/gmol, and 0.05 gram in 50 milliliter of solvent for molecular weights less than 1,000,000 g/gmol. The polystyrene standards were dissolved at 80 °C with gentle agitation for 30 minutes. The narrow standards mixtures were run first, and in order of decreasing highest molecular weight component, to minimize degradation. The polystyrene standard peak molecular weights were converted to polyethylene molecular weights using the following equation (as described in Williams and Ward, J. Polym. Sci., Polym. Let., 6, 621 (1968)):

$$M_{polyethylene} = A \text{ x } (M_{polystyrene})^B$$

where M is the molecular weight, A has a value of 0.41 and B is equal to 1.0. The Systematic Approach for the determination of multi-detector offsets was done in a manner consistent with that published by Balke, Mourey, et al. (Mourey and Balke, Chromatography Polym. Chpt 12, (1993) and Balke, Thitiratsakul, Lew, Cheung, Mourey, Chromatography Polym. Chpt 13, (1993)), optimizing dual detector log results from Dow broad polystyrene 1683 to the narrow standard column calibration results from the narrow standards calibration curve using in-house software. The molecular weight data for off-set determination was obtained in a manner consistent with that published by Zimm (Zimm,B.H., J.Chem. Phys., 16, 1099 (1948)) and Kratochvil (Kratochvil, P., Classical Light Scattering from Polymer Solutions, Elsevier, Oxford, NY (1987)). The overall injected concentration used for the determination of the molecular weight was obtained from the sample refractive index area and the refractive index detector calibration from a linear polyethylene homopolymer of 115,000 g/gmol molecular weight, which was measured in reference to NIST polyethylene homopolymer Standard 1475. The chromatographic concentrations were assumed low enough to eliminate addressing 2nd Virial coefficient effects (concentration effects on molecular weight). Molecular weight calculations were performed using in-house software. The calculation of the number average molecular weight, $M_n$, and weight average molecular weight, $M_w$, were made according to the following equations, assuming that the refractometer signal is directly proportional to weight fraction. The baseline-subtracted refractometer signal can be directly substituted for weight fraction in the equations below. Note that the molecular weight can be from the conventional calibration curve or the absolute molecular weight from the light scattering to refractometer ratio.

$$\overline{Mn} = \frac{\sum^{i} Wf_i}{\sum^{i} \left( Wf_i / M_i \right)}$$

$$\overline{Mw} = \frac{\sum^{i} \left( Wf_i * M_i \right)}{\sum^{i} Wf_i}$$

Resin density was measured by the Archimedes displacement method, ASTM D 792-03, Method B, in isopropanol. Specimens (about 45 mm in diameter and about 2 mm thick) were measured within one hour of molding, after conditioning in an isopropanol bath at 23 °C for eight minutes, to achieve thermal equilibrium prior to measurement. The specimens were compression molded according to ASTM D-4703-00, Annex A, with a five minute initial heating period, at approximately 190 °C and 690 kPag (100 psig), 3 minute heating period at approximately 190 °C at 10.3 MPag (1500 psig), and then cool at 15 °C per minute cooling rate at 10.3 MPag (1500 psig) per Procedure C to 45 °C, and continued cooling until "cool to the touch".

Melt flow rate measurements were performed according to ASTM D-1238-04, Condition 190°C with 21.6 kg weight, which is known as high load melt index ($I_{21}$). Melt flow rate is inversely proportional to the molecular weight of the polymer. Thus, the higher the molecular weight, the lower the melt flow rate, although the relationship is not linear.

Failure of bubble stability is defined as the inability to control the bubble, and to form film with excellent gauge (thickness) uniformity. Bubble stability is measured on the following blown film line, commercially available from Hosokawa Alpine Corporation, under the following conditions:

<div align="center">

Extruder and film line operating parameters

| | | |
|---|---|---|
| Barrel Zone 1 | 199 °C | (390 °F) |
| Barrel Zone 2 | 204 °C | (400 °F) |
| Adapter Bottom | 204 °C | (400 °F) |
| Adapter Vertical | 210 °C | (410 °F) |
| Bottom Die | 210 °C | (410 °F) |
| Middle Die | 210 °C | (410 °F) |
| Top Die | 210 °C | (410 °F) |
| Output Rate | 45.4 kg/h | (100 lb/h) |
| Blow up ratio (BUR) | 4:1 | |
| Neck height | 0.81 m | (32 inch) |
| Frost line height | 1.07 m | (42 inch) |
| Melt temperature | 210 °C | (410 °F) |
| Lay Flat Width | 0.64 m | (25.25 inch) |
| Film Thicknesses | 25 μm | (0.001 inch) |
| | 13 μm | (0.0005 inch) |

</div>

**Blown film equipment description**

Alpine HS50S stationary extrusion system

- 50 mm 21:1 L/D grooved feed extruder

- 44.8 kW (60 hp) DC drive

- extruder has a cylindrical screen changer

- standard control panel with nine RKC temperature controllers

Alpine Die BF 10-25

- 12 spiral design

- complete with insert to make up a 100 mm die diameter

Alpine Air Ring HK 300

- single lip design

- air lips for a 100 mm die diameter

- 5.6 kW (7.5 hp) blower with variable speed AC drive

Bubble calibration Iris Model KI 10-65

- layflat width (LFW) range 0.178 m (7 inch) to 0.991 m (39 inch)

Alpine Take-Off Model A8

- collapsing frame with side guides with hard wood slats

- maximum layflat width (LFW): 0.787 m (31 inch)

- roller face width: 0.889 m (35 inch)

- maximum takeoff speed: 2.54 m/s (500 ft/min)

- 4 idler rolls

Alpine surface winder Model WS8

- maximum LFW: 0.787 m (31 inch)

- roller face width: 0.889 m (35 inch)

- maximum line speed: 2.54 m/s (500 ft/min)

- automatic cutover

Unless stated otherwise, gravimetric feed was used. Blowing and winding were initiated and established at an output rate of 45.4 kg/h (100 lb/h) and winder speed of 0.42 m/s (82.5 ft/min), with a neck height of 0.81 m (32.0 in), with a layflat width of 0.622 m (24.5 in), with a symmetrical bubble producing a film approximately 25 $\mu$m (0.001 inch) thick. These conditions were maintained for at least 20 minutes and the bubble blown in the process was visually observed for helical instability or bubble diameter oscillation. Helical instability involves decreases in diameter in a helical pattern around the bubble. Bubble diameter oscillation involves alternating larger and smaller diameters. A bubble is considered stable, in others words passing, as long as neither of these conditions (helical instability and bubble diameter oscillation) is observed during about ten minutes of operation, even though some bubble chatter may be observed. While a constant extruder output rate of 45.4 kg/h (100 lb/hr) was maintained, the winder speed was increased to decrease the film thickness until the bubble becomes unstable. The winder speed was increased in about 0.05 m/s (10 ft/min) increments while the air ring blower setting was adjusted to maintain the neck height. At each increment, the bubble blown in the process was visually observed for helical instability or bubble diameter oscillation. The winder speed at which the bubble became unstable was recorded as the maximum winder speed.

The resin rheology was measured on the ARES I (Advanced Rheometric Expansion System) Rheometer. The ARES is a strain controlled rheometer. A rotary actuator (servomotor) applies shear deformation in the form of strain to a sample. The sample composition was compression molded into a disk for rheology measurement. The disks were prepared by pressing the samples into 1.8 mm (0.071 inch) thick plaques, and were subsequently cut into "25.4 mm (one inch) diameter" disks. The compression molding procedure was as follows: 185 °C (365 °F) for 5 min at 689 kPag (100 psig); 185 °C (365 °F) for 3 min at 10.3 MPag (1500 psig); cooling at 15 °C (27 °F) per minute to ambient temperature (about 23 °C).

In response, the sample generates torque, which is measured by the transducer. Strain and torque are used to calculate dynamic mechanical properties, such as modulus and viscosity. The viscoelastic properties of the sample were measured in the melt using a parallel plate set up, at constant strain (10%) and temperature (190 °C), and as a function of varying frequency (0.01 s$^{-1}$ to 100 s$^{-1}$). The storage modulus (G'), loss modulus (G"), tan delta, and complex viscosity (eta*) of the resin were determined using Rheometrics Orchestrator software (v. 6.5.8). The RSI values were determined using IRIS® rheological software which is commercially available from IRIS Development.

**Claims**

1.   A method for improving the bubble stability of a polyethylene composition suitable for blown film extrusion process comprising the steps of:

providing an initial polyethylene composition comprising ethylene polymers comprising ethylene and 0.1% to 40% by weight of one or more units derived from the comonomers selected from branched higher alpha-olefins containing 3 to 20 carbon atoms and branched hydrocarbon dienes having from 5 to 20 carbon atoms, the initial polyethylene composition having a density in the range of 0.900 g/cm$^3$ to 0.970 g/cm$^3$ as measured in accordance with ASTM D792-03 and an relaxation spectrum index (RSI) value in the range of 10 to 100;
oxygen tailoring said polyethylene composition;
thereby forming an oxygen tailored polyethylene composition; measuring the RSI value of the oxygen tailored polyethylene composition; wherein the RSI value of the said oxygen tailored polyethylene composition increases from 10% to 300% over that of the initial polyethylene composition; and
wherein the bubble stability of the oxygen tailored polyethylene composition is greater than that of the initial polyethylene composition.

2.   The method for improving the bubble stability of a polyethylene composition suitable for blown film extrusion process of Claim 1, wherein said oxygen tailoring step comprises contacting said polyethylene composition in the molten state with oxygen.

3.   The method for improving the bubble stability of a polyethylene composition suitable for blown film extrusion process of Claim 2, wherein said oxygen tailoring step further comprises thermomechanical treatment of said polyethylene composition in an extruder.

4.   The method for improving the bubble stability of a polyethylene composition suitable for blown film extrusion process of Claim 3, wherein said extruder provides a specific energy input in the range of 0.10 kWh per kilogram to 0.50 kWh per kilogram of said polyethylene composition.

**Patentansprüche**

1.   Ein Verfahren zum Verbessern der Blasenstabilität einer Polyethylenzusammensetzung, die für einen Blasfolienextrusionsvorgang geeignet ist, das die folgenden Schritte beinhaltet:

Bereitstellen einer anfänglichen Polyethylenzusammensetzung, die Ethylenpolymere beinhaltet, beinhaltend Ethylen und zu 0,1 Gew.-% bis 40 Gew.-% eine oder mehrere Einheiten, die aus den Comonomeren abgeleitet sind, die aus verzweigten höherwertigen alpha-Olefinen, welche 3 bis 20 Kohlenstoffatome enthalten, und verzweigten Kohlenwasserstoffdienen, welche 5 bis 20 Kohlenstoffatome aufweisen, ausgewählt sind, wobei die anfängliche Polyethylenzusammensetzung eine Dichte im Bereich von 0,900 g/cm$^3$ bis 0,970 g/cm$^3$, wie gemäß ASTM D792-03 gemessen, und einen Relaxationsspektrumsindex(RSI)-Wert im Bereich von 10 bis 100 aufweist;
Behandeln der Polyethylenzusammensetzung mit Sauerstoff;
wodurch eine sauerstoffbehandelte Polyethylenzusammensetzung gebildet wird;
Messen des RSI-Werts der sauerstoffbehandelten Polyethylenzusammensetzung;
wobei sich der RSI-Wert der sauerstoffbehandelten Polyethylenzusammensetzung 10 % bis 300 % über den der anfänglichen Polyethylenzusammensetzung erhöht; und
wobei die Blasenstabilität der sauerstoffbehandelten Polyethylenzusammensetzung höher als die der anfänglichen Polyethylenzusammensetzung ist.

**2.** Verfahren zum Verbessern der Blasenstabilität einer Polyethylenzusammensetzung, die für einen Blasfolienextrusionsvorgang geeignet ist, gemäß Anspruch 1, wobei der Schritt des Behandelns mit Sauerstoff das In-Kontakt-Bringen der Polyethylenzusammensetzung im geschmolzenen Zustand mit Sauerstoff beinhaltet.

**3.** Verfahren zum Verbessern der Blasenstabilität einer Polyethylenzusammensetzung, die für einen Blasfolienextrusionsvorgang geeignet ist, gemäß Anspruch 2, wobei der Schritt des Behandelns mit Sauerstoff ferner die thermomechanische Bearbeitung der Polyethylenzusammensetzung in einem Extruder beinhaltet.

**4.** Verfahren zum Verbessern der Blasenstabilität einer Polyethylenzusammensetzung, die für einen Blasfolienextrusionsvorgang geeignet ist, gemäß Anspruch 3, wobei der Extruder eine spezifische Energiezufuhr im Bereich von 0,10 kWh pro Kilogramm bis 0,50 kWh pro Kilogramm der Polyethylenzusammensetzung bereitstellt.

**Revendications**

**1.** Une méthode pour améliorer la stabilité de bulles d'une composition de polyéthylène convenant pour un procédé d'extrusion de film soufflé comprenant les étapes consistant à :

fournir une composition de polyéthylène initiale comprenant des polymères d'éthylène comprenant de l'éthylène et de 0,1 % à 40 % en poids d'une ou de plusieurs unités dérivées des comonomères sélectionnés parmi des alpha-oléfines supérieures ramifiées contenant 3 à 20 atomes de carbone et des diènes hydrocarbures ramifiés ayant de 5 à 20 atomes de carbone, la composition de polyéthylène initiale ayant une masse volumique comprise dans la gamme allant de 0,900 g/cm$^3$ à 0,970 g/cm$^3$ telle que mesurée selon l'ASTM D792-03 et une valeur d'indice de spectre de relaxation (RSI) comprise dans la gamme allant de 10 à 100 ;
adapter par l'oxygène ladite composition de polyéthylène ;
former par là une composition de polyéthylène adaptée par l'oxygène ; mesurer la valeur de RSI de la composition de polyéthylène adaptée par l'oxygène ; où la valeur de RSI de ladite composition de polyéthylène adaptée par l'oxygène augmente de 10 % à 300 % au-dessus de celle de la composition de polyéthylène initiale ; et
où la stabilité de bulles de la composition de polyéthylène adaptée par l'oxygène est supérieure à celle de la composition de polyéthylène initiale.

**2.** La méthode pour améliorer la stabilité de bulles d'une composition de polyéthylène convenant pour le procédé d'extrusion de film soufflé de la revendication 1, où ladite étape consistant à adapter par l'oxygène comprend la mise en contact de ladite composition de polyéthylène à l'état fondu avec de l'oxygène.

**3.** La méthode pour améliorer la stabilité de bulles d'une composition de polyéthylène convenant pour le procédé d'extrusion de film soufflé de la revendication 2, où ladite étape consistant à adapter par l'oxygène comprend en outre un traitement thermomécanique de ladite composition de polyéthylène dans une extrudeuse.

**4.** La méthode pour améliorer la stabilité de bulles d'une composition de polyéthylène convenant pour le procédé d'extrusion de film soufflé de la revendication 3, où ladite extrudeuse fournit un apport d'énergie spécifique dans la gamme allant de 0,10 kWh par kilogramme à 0,50 kWh par kilogramme de ladite composition de polyéthylène.

# FIG. 1

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 700769 A
- WO 03047839 A
- WO 2006023213 A
- EP 1408055 A
- US 5962598 A
- US 5798427 A
- US 6485662 B

### Non-patent literature cited in the description

- **J. M. DEALY ; K. F. WISSBRUN.** Melt Rheology and Its Role in Plastics Processing. Van Nostrand Reinhold, 1990, 269-297
- **S. H. WASSERMAN.** *J. Rheology,* 1995, vol. 39, 601-625
- **J. D. FERRY.** Viscoelastic Properties of Polymers. John Wiley & Sons, 1980, 224-263
- **WILLIAMS ; WARD.** *J. Polym. Sci., Polym. Let.,* 1968, vol. 6, 621
- **MOUREY ; BALKE.** Chromatography Polym. 1993
- **BALKE ; THITIRATSAKUL ; LEW ; CHEUNG ; MOUREY.** Chromatography Polym. 1993
- **ZIMM,B.H.** *J.Chem. Phys.,* 1948, vol. 16, 1099
- **KRATOCHVIL, P.** Classical Light Scattering from Polymer Solutions. Elsevier, 1987